# EUROPEAN PATENT SPECIFICATION

(11) **EP 3 349 177 B1**
(45) Date of publication and mention of the grant of the patent: **15.09.2021**
(21) Application number: 17837934.3
(22) Date of filing: 26.05.2017
(51) Int. Cl.: G06T 7/62

(54) **SYSTEM, METHOD, AND PROGRAM FOR MEASURING DISTANCE BETWEEN SPHERICAL OBJECTS**
SYSTEM, VERFAHREN UND PROGRAMM ZUR MESSUNG DER DISTANZ ZWISCHEN KUGELFÖRMIGEN GEGENSTÄNDEN
SYSTÈME, PROCÉDÉ ET PROGRAMME DE MESURE DE DISTANCE ENTRE DES OBJETS SPHÉRIQUES

(30) Priority: 17.11.2016 JP 2016223991
(43) Date of publication of application: 18.07.2018
(73) Proprietor: CAC Corporation, Tokyo 103-0015 (JP)
(72) Inventor: SUZUKI, Takahiro, Tokyo 103-0015 (JP); KUME, Yoshinori, Tokyo 103-0015 (JP); KOBAYASHI, Yoshiro, Tokyo 103-0015 (JP); SAKAI, Iori, Tokyo 103-0015 (JP); INAGAKI, Yoshinori, Tokyo 103-0015 (JP)
(74) Representative: J A Kemp LLP
(86) International application number: PCT/JP2017/019691
(87) International publication number: WO 2018/092332

(56) References cited:
- EP-A2- 2 866 197
- WO-A1-2013/059599
- JP-A- 2008 283 502
- JP-A- 2009 033 237
- JP-A- 2016 220 047
- JP-A- 2017 103 657
- US-A1- 2013 040 700

## Description

The present invention relates to a technology for performing inter-spherical-object distance measurement. More specifically, the present invention relates to the technology of acquiring an inter-ball distance measurement image and measuring an inter-ball distance from the image.

A sport called "boccia", which is an official Paralympics sport, was developed in Europe for people with severe cerebral palsy or people with equivalently severe limb dysfunction.

In boccia, six red balls and six blue balls are thrown, rolled, or hit against other balls to become close to a white ball called a jack (target ball) as much as possible. In boccia, the winner is decided based on the distance (not a distance with respect to the center of a ball, but a distance with respect to the surface of the ball) between the white ball as the jack and each of the red and blue balls.

The initial position of the white ball on the court of boccia varies because, for example, the jack is thrown by a player, and the position of the white ball changes from the initial position by collision with another ball in a game. The color (red, blue, or white), weight (275 g±12 g), and perimeter (270 mm±8 mm) of a ball are defined, but there is no restriction on the material thereof. In addition, it is not allowed to provide a ball with modifications such as cutting and attaching of a sticker, but the ball has a pattern (such as a printed manufacturer logo) thereon in some cases.

The distance between balls in boccia is currently manually measured by using, for example, a tape measure. However, such a method potentially moves a ball, which has a relatively light weight, at the measurement.

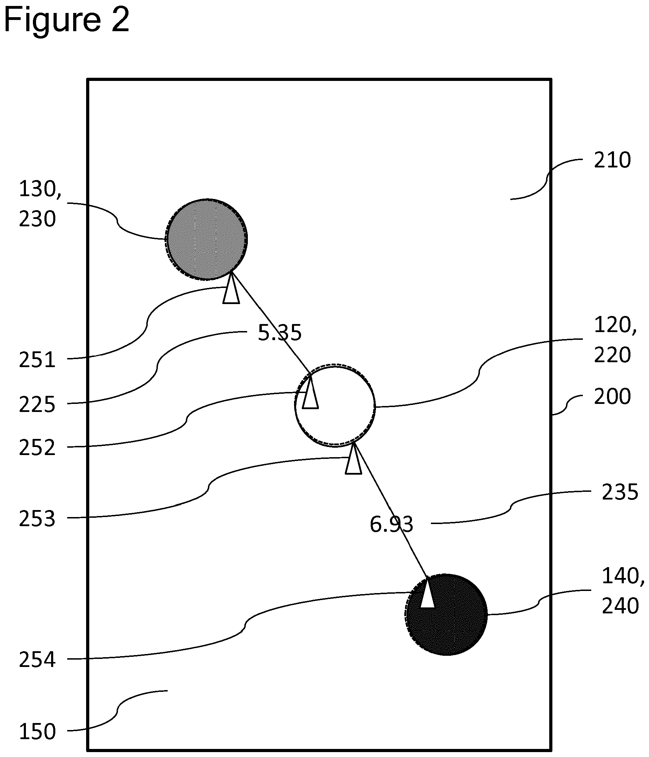

Japanese Patent Publication No. 2008-228773 as a prior art related to distance measurement discloses a play device. In this play device, for example, a CCD camera fixed to the play device performs image capturing of a predetermined area. The coordinates of the central point (reference point) of a reference circle are calculated from an initial image, the positional coordinates of the central point of a play medium are calculated from a determination image, and then the straight distance between the reference point and the central point of the play medium is calculated (refer to, for example, paragraphs [0100] and [0148] and Figure 2 of the literature).

WO-A1-2013/059599 discloses methods and systems for image-based measurement of length, area, distance, velocity and height using a smartphone

In boccia, the jack can be positioned anywhere on the relatively large court. In some cases, a ball deforms in a game since there is no restriction on the material of the ball, or a deformed ball is used from the start. However, the distance between balls is measured with respect to the surfaces thereof.

Thus, a method using a fixed camera for performing image capturing of a predetermined area only, and a method of simply measuring the distance between the centers of objects are not applicable to the inter-ball distance measurement in boccia.

Any method capable of performing inter-ball distance measurement under a condition such as that in boccia without a risk of wrongly moving a ball is extremely useful.

The present invention provides a system and a method for inter-spherical-object distance measurement as defined by the appended claims .

The present invention may be embodied as a computer program causing a computer to perform the above-described method.

The invention will be further described by way of example with reference to the accompanying drawings, in which:
Figure 1 illustrates a first screen according to an embodiment of the present invention.
Figure 2 illustrates a second screen according to the embodiment of the present invention.
Figure 3 is a block diagram of a system 300 as an exemplary embodiment of the present invention.
Figure 4 is a block diagram for more detailed description of a circle detecting means 331.
Figure 5 is a block diagram for more detailed description of a color specifying means 338.
Figure 6 is a flowchart of a method 600 as another exemplary embodiment of the present invention.
Figure 7 is a flowchart of a first determination step 700.
Figure 8 is a flowchart of a second determination step 800.
Figure 9 is a flowchart for more detailed description of a circle detecting step 731.
Figure 10 is a flowchart for more detailed description of a color specifying step 638.
Figure 11 is a diagram for description of meaning of horizontal orientation.
Figure 12 is a diagram for description of meaning of use of images of a plurality of channels.
Figure 13 is a diagram for description of processing at an outline detecting means 335.
Figure 14 is a diagram for description of a computer.

### DESCRIPTION OF EMBODIMENTS

### 1. Exemplary implementation according to the present invention

The following first describes an example in which the present invention is achieved by using a typical smartphone to facilitate understanding of the present invention.

The present smartphone at least includes, as hardware resources, a touch panel display, a camera, an acceleration sensor, a speaker, a memory, and a processor. The touch panel display, the camera, the acceleration sensor, and the speaker are each controlled by the processor in accordance with a computer program (software) stored in the memory.

The present smartphone has flat plate appearance. The touch panel display at least a main part of which is plane is attached on one surface of the flat plate, and the camera is attached on the other surface. The camera is fixed such that a plane perpendicular to the optical axis of an optical system thereof is parallel to the plane of the flat plate. Thus, when the present smartphone is horizontal, the plane perpendicular to the optical axis of the camera is horizontal, too.

The acceleration sensor outputs a signal depending on the tilt of the present smartphone. In other words, the acceleration sensor outputs a signal depending on the tilt of the camera fixed to the present smartphone, which is the tilt of the optical axis. The acceleration sensor may be replaced with another sensor of any type for sensing the tilt of the optical axis of the optical system of the camera.

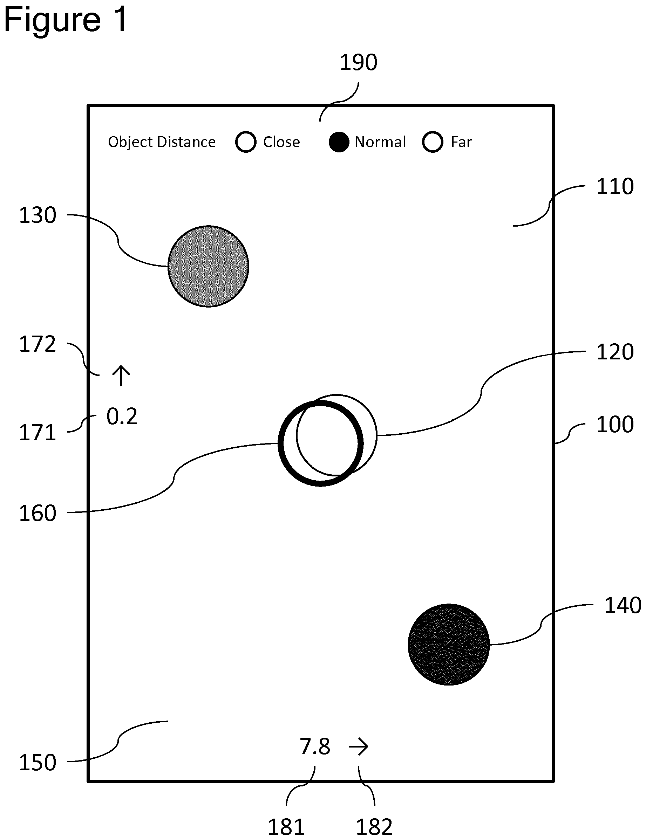

Figure 1 illustrates a first screen 100 displayed on the touch panel display.

The screen 100 includes an image 110 output from the camera. The output image 110 changes from moment to moment in response to movement of the smartphone. Reference signs 120, 130, and 140 denote images obtained by capturing white, red, and blue balls, respectively. Reference sign 150 denotes an image obtained by capturing a floor on which a ball is placed. Reference sign 160 denotes a guide displayed in an overlapping manner over the output image 110.

Reference signs 171 and 181 each indicate the degree of the tilt of the smartphone obtained from an output from the acceleration sensor, and 172 and 182 each indicate how the smartphone needs to be tilted to be horizontal.

The value "0.2" denoted by 171 indicates that, with reference to the sheet of Figure 1, an upper side of the screen 100 is tilted toward a front side of the sheet relative to a lower side thereof by 0.2[degrees] from a horizontal direction. An up arrow denoted by 172 indicates that the smartphone becomes horizontal by tilting the lower side of the screen 100 toward the front side of the sheet relative to the upper side. When the lower side of the screen 100 is tilted toward the front side of the sheet relative to the upper side, the value denoted by 171 is negative, and the arrow denoted by 172 is a down arrow. When the smartphone is horizontal, the value denoted by 171 is zero, and the arrow denoted by 172 is not displayed.

Similarly, "7.8" denoted by 181 indicates that, with reference to the sheet of Figure 1, a right side of the screen 100 is tilted toward the front side of the sheet relative to a left side thereof by 7.8 [degrees] from a horizontal direction. A right arrow denoted by 182 indicates that the smartphone becomes horizontal by tilting the left side of the screen 100 toward the front side of the sheet relative to the right side. When the left side of the screen 100 is tilted toward the front side of the sheet relative to the right side, the value denoted by 181 is negative, and the arrow denoted by 182 is a left arrow. When the smartphone is horizontal, the value denoted by 181 is zero, and the arrow denoted by 182 is not displayed.

When the screen 100 is displayed on the touch panel display, a user is requested to adjust the tilt of the smartphone so that the smartphone becomes horizontal and the white ball 120 overlaps with the guide 160 and move the smartphone in up, down, front, back, right, and left directions while watching the screen. When a state in which the smartphone is substantially horizontal continues for a certain time, and the white ball 120 substantially overlaps with the guide 160, the smartphone automatically stores the current output image 110 as a specified image.

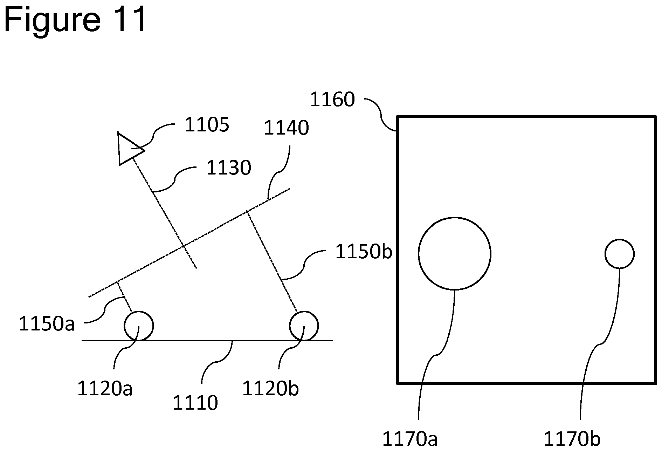

The following describes the technical meaning of placing the smartphone so as to be horizontal. As described above, the state in which the smartphone is horizontal indicates that the plane perpendicular to the optical axis of the optical system of the camera is horizontal. Typically, scaling of the size of the object on an output screen varies in accordance with a perpendicular distance between the plane perpendicular to the optical axis of the optical system of the camera and a captured object. For example, as illustrated in Figure 11, at image capturing of two balls 1120a and 1120b having identical sizes and placed on a horizontal ground 1110 when a plane 1140 perpendicular to an optical axis 1130 of an optical system of a camera 1105 is not horizontal, perpendicular distances 1150a and 1150b between the plane and the respective balls are different from each other in some cases. In such a case, sizes 1170a and 1170b of the balls captured on an output image 1160 are different from each other. This indicates that the distance between such two points in the output image 1160 can differ depending on the positions of the two points on the image.

The following describes the technical meaning of overlapping the white ball 120 with the guide 160. The smartphone can store, as a conversion coefficient (for example, in the unit of cm/pixel) in advance, a relation between the size of the white ball in a predetermined unit (for example, the diameter in the unit of cm) and the size of the guide 160 on the image 110 (for example, the diameter, in the unit of pixel, of a circle overlapping with a thick line of a circle illustrated as the guide 160 displayed on the image 110). Thus, when the white ball 120 overlaps with the guide 160, the distance between two points on the image 110 in a predetermined unit can be calculated as the product of the conversion coefficient × the distance between two points on the image 110 (it is assumed that the image 110 is obtained while the smartphone is horizontal as described above).

The following describes the technical meaning of automatically storing an image. When an image is stored in response to a certain input, in particular, a physical input after the above-described condition is satisfied, the condition becomes not satisfied due to the input in some cases. For example, a tap on the touch panel display can move or tilt the smartphone. The automatic image storing when the condition is satisfied is a solution to such a problem.

One or both of whether the smartphone is horizontal and whether the white ball 120 overlaps with the guide 160 may be indicated by sound from the speaker. For example, the smartphone may be configured to emit, from the speaker, repetitive sound (Pi Pi Pi ...) at a longer interval when the smartphone is far away from the horizontal posture, repetitive sound (PiPiPi ...) at a short interval when the smartphone is close to the horizontal posture, low pitch sound (Pu, Pu, Pu, ...) when the white ball 120 is outside of the guide 160, or high pitch sound (Pi, Pi, Pi ...) when the white ball 120 is inside of the guide 160.

Reference sign 190 denotes a user interface (UI) for changing the size of the guide 160. When the size of the guide 160 is increased (zoom), the smartphone is moved closer to the white ball 120 so that the white ball 120 overlaps with the guide 160, as a result, image capturing is performed on a smaller region of the floor 150, but the accuracy of distance measurement improves. When the size of the guide 160 is reduced (pan), the smartphone is moved farther away from the white ball 120 so that the white ball 120 overlaps with the guide 160, and as a result, image capturing is performed on a larger region of the floor 150, but the accuracy of distance measurement degrades. The UI 190 may be configured to change the magnification of optical or digital zoom of the camera while keeping intact the size of the guide 160. On assumption that an object distance is changed by the UI 190, the smartphone may be configured to store a plurality of conversion coefficients corresponding to respective object distances in advance, or to derive a conversion coefficient corresponding to any object distance from one conversion coefficient.

In an extreme case, the output image 110 is appropriately stored when a predetermined condition is satisfied by randomly moving the smartphone in the up, down, front, back, right, and left directions at an appropriate place and adjusting the tile thereof while watching no display and listening no sound. Thus, display of the screen 100 and sound are not essential. This indicates that the present invention is applicable to a device including no display nor speaker.

Figure 2 illustrates a second screen 200 displayed on the touch panel display after the output image 110 at a certain moment is stored as a specified image 210. The stored specified image 210 is also displayed on the screen 200.

Reference sign 220 (dashed line) denotes a circle corresponding to the white ball 120, which is detected from the specified image 210. Reference signs 230 and 240 (dashed line) denote similarly detected circles corresponding to the red ball 130 and the blue ball 140.

Reference signs 225 and 235 denote the distance between the white ball 120 and the red ball 130 and the distance between the white ball and the blue ball 140, respectively, which are measured in a predetermined unit (for example, cm). The distance is measured with respect to detected outlines (not illustrated) of balls. The outlines are obtained by using the circles 220, 230, and 240 detected for the balls, which will be described later.

Reference signs 251, 252, 253, and 254 each denote a marker having a leading end indicating a reference point (outline) of distance measurement. When outline detection fails and no correct distance is obtained, recalculated distance 225 or 235 is displayed by manually moving the marker 251, 252, 253, or 254 so that the leading end thereof points a correct reference point. A marker may be added or deleted.

The screen 200 does not need to be displayed on the smartphone. For example, when an embodiment of the present invention is used at a boccia competition, the screen 200 may be displayed on a screen installed on the site of the competition.

### 2. First embodiment of the present invention

The following describes a system for inter-spherical-object distance measurement as an exemplary embodiment of the present invention.

### 2-1. Outline of embodiment

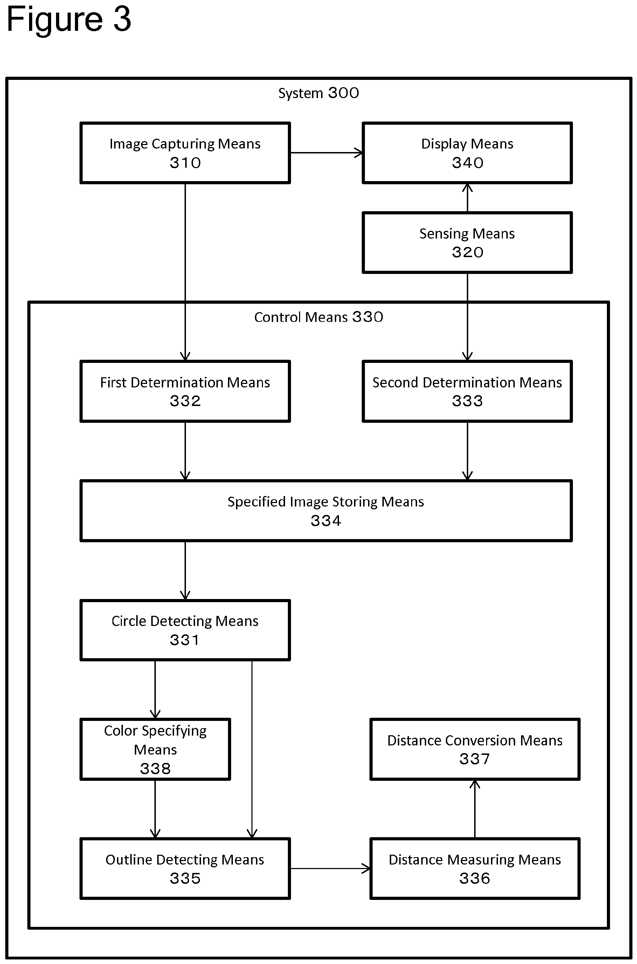

Figure 3 is a block diagram illustrating main means included in this system 300. An arrow between blocks represents exemplary flow of information. The system 300 may exclude part of the means or include an additional means not illustrated, and the information may flow through a path different from that illustrated in Figure 3.

Reference sign 310 denotes a movable image capturing means having an optical axis. This means is achieved by, for example, cooperation between software and at least a camera as a hardware resource. The image capturing means 310 has an optical axis that is, when, for example, a camera is used, the optical axis of the optical system of the camera. Although the camera of the smartphone is exemplarily illustrated above, the hardware resource for achieving the image capturing means 310 is not limited thereto. For example, the hardware resource may be a camera mounted on a drone.

Reference sign 320 denotes a sensing means for providing an output depending on the tilt of the optical axis of the image capturing means 310. This means is achieved by, for example, cooperation between software and at least a sensor as a hardware resource. The sensor is, for example, the acceleration sensor exemplarily illustrated above, but may be a sensor for optically sensing the tilt by using a plurality of cameras or the like.

Reference sign 330 denotes a control means including means illustrated in Figure 3 and to be described below (part of the means are not included in an embodiment in some cases). This means is achieved by, for example, cooperation between software and at least a processor and a memory as hardware resources.

Reference sign 332 denotes a first determination means for determining whether an image of a spherical object having a predetermined size is captured at a predetermined position in an output image from the image capturing means 310. Typically, the optical system of the camera has specific aberration. The "output image from the image capturing means 310" may be an image obtained by correcting at least part of such aberration by the well-known method.

The first determination means 332 may perform any determination method. For example, when the inside of a circle having a predetermined size and assumed at a predetermined position in an output image from the image capturing means 310 is significantly brighter than the outside of the circle, the first determination means 332 determines that an image of a spherical object having the predetermined size is captured at the predetermined position. In other words, the first determination means performs the determination through comparison between a value based on the luminance value of at least one pixel inside of the circle and a value based on the luminance value of at least one pixel outside the circle. More specifically, for example, the first determination means 332 determines that an image of a spherical object having the predetermined size is captured at the predetermined position when a value obtained by multiplying, by a predetermined ratio, the average value or median value of the luminance values of at least two pixels near the circumference of the circle and inside of the circle is larger than the average value or median value of the luminance values of at least two pixels near the circumference of the circle and outside of the circle. Alternatively, the first determination means 332 determines that an image of a spherical object having the predetermined size is captured at the predetermined position, for example, when a value obtained by multiplying, by a predetermined ratio, the average value or median value of the luminance values of pixels inside of the circle is larger than the average value or median value of the luminance values of pixels inside of a rectangle circumscribing the circle and outside of the circle. The "predetermined ratio" may be 110% approximately.

The above-described exemplary method is preferable particularly when the spherical object is a white ball, and requires a small calculation amount as compared to an exemplary method to be described later. When the system 300 includes a display means 340 to be described later, a "circle having a predetermined size and assumed at a predetermined position" in the above-described exemplary method may be identical to a circle displayed in an overlapping manner.

Another exemplary determination method used by the first determination means 332 uses a circle detected based on the output image from the image capturing means 310 and having a size in a predetermined range in the image. The first determination means 332 determines that an image of a spherical object having a predetermined size is captured at the predetermined position when a circle having a size in the predetermined range and having a center, the distance to which from a predetermined position is equal to or smaller than a predetermined threshold is detected in the output image from the image capturing means 310. The circle detection may be performed, by a means not illustrated, through processing similarly to processing performed by a circle detecting means 331 to be described later. When the system 300 includes the display means 340 to be described later, the "size in the predetermined range" in the above-described exemplary method may include the size of a circle displayed in an overlapping manner, a "predetermined position" in the above-described exemplary method may be the center of the circle, and a "predetermined threshold" in the above-described exemplary method may be the radius of the circle.

In the two methods exemplarily illustrated above, when a circle displayed in an overlapping manner substantially overlaps with a captured image of a spherical object in the configuration in which the system 300 includes the display means 340, the first determination means 332 provides true determination.

Reference sign 333 denotes a second determination means for determining whether a plane perpendicular to the optical axis of the image capturing means 310 is horizontal by using an output from the sensing means 320. The state of being "horizontal" does not require the plane to be "completely horizontal". The second determination means may determine that the plane perpendicular to the optical axis of the image capturing means 310 is horizontal when the output from the sensing means 320 indicates, for a predetermined time, that the plane is horizontal. Thus, the second determination means 333 determines that the plane is horizontal when the plane is horizontal in a predetermined range such as an appropriate error range for a predetermined time such as one second.

Reference sign 334 denotes a specified image storing means for automatically storing the output image from the image capturing means 310 as a specified image when it is determined that an image of a spherical object having a predetermined size is captured at a predetermined position in an output image and when it is determined the plane perpendicular to the optical axis of the image capturing means 310 is horizontal.

In the present example, the specified image storing means 334 receives the output image related to the determination from the first determination means 332, but in another example, the specified image storing means 334 may receive a result of the determination from the first determination means 332 and the output image from the image capturing means 310. In the latter case, an image used for the determination by the first determination means 332 and the output image received from the image capturing means 310 are not simultaneously obtained but temporally sequentially obtained in some cases. Such temporal difference is allowed when it is sufficiently small.

Reference sign 340 denotes a display means, which may be included in the system 300, for displaying, overlapping a circle having a predetermined size and indication depending on the tilt of the optical axis of the image capturing means 310, an output image from the image capturing means 310. This means is achieved by, for example, cooperation between software and at least a display as a hardware resource. The circle displayed in an overlapping manner corresponds to the guide 160 illustrated in Figure 1. The size of a detected circle may be in the range of the size of a circle detected by the first determination means 332 in the above-described exemplary determination method or by the circle detecting means 331 to be described later. In other words, the range of the size of a detected circle may be set by using, as a reference, the size of a circle as a guide (for example, 20% of the predetermined size). The indication depending on the tilt corresponds to 171, 172, 181, and 182 illustrated in Figure 1.

Reference sign 331 denotes a circle detecting means, which may be included in the system 300, for detecting, based on an output image stored by the specified image storing means 334, which is a specified image, circles having sizes in a predetermined range in the image. The circle detection may be performed by using, for example, the well-known Hough conversion. The well-known library such as OpenCV that is available for the circle detection may be used as software.

Such limitation of the size of a detected circle to the predetermined range is intended to allow detection of a spherical object such as a ball having a defined size. This configuration can prevent false detection of, for example, a floor pattern detected as a circle but having a wrong size.

Reference sign 335 denotes an outline detecting means, which may be included in the system 300, for detecting an outline based on the specified image. The outline detection may be performed by, for example, the well-known Canny algorithm. The outline detecting means 335 may detect, for each circle of the detected circles, as an outline related to the circle of interest of the detected circles, at least an outline positioned on a line segment connecting the center of the circle of interest and the center of another of the detected circles and positioned in a predetermined range from the center of the circle of interest. If a plurality of such outlines exist, the outline related to the circle of interest is preferably detected to be an outline outermost from the center of the circle of interest, in other words, an outline farthest from the center of the circle of interest among the outlines. The outline detected in this manner corresponds to the leading end of each of the markers 251, 252, 253, and 254 illustrated in Figure 2.

The "predetermined range" used by the outline detecting means 335 may be same as or different from the "predetermined range" in the "size in the predetermined range" used by the circle detecting means 331. Depending on the specified image, an outline cannot be appropriately detected, and in particular, an outline cannot be detected for a certain circle of interest in the predetermined range from the center of the circle of interest and on a line segment connecting the center of the circle of interest and the center of another circle in some cases. In such a case, the outline detecting means 335 may detect, as an outline, an intersection point between the circle of interest and the line segment.

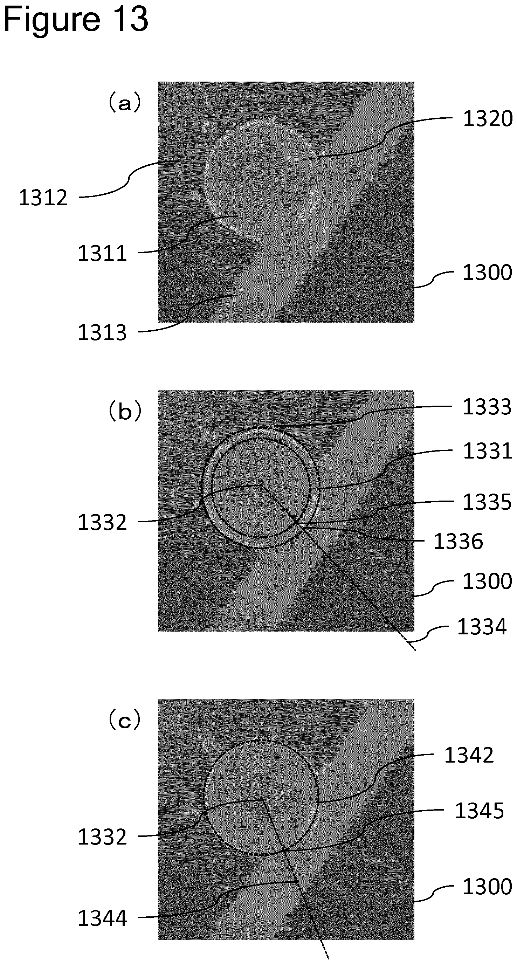

The following describes the above-described processing by the outline detecting means 335 with reference to Figure 13. In Figure 13(a), reference sign 1300 denotes part of an image of the Cb channel of an exemplary specified image. What referred to by reference sign 1300 is common to Figures 13(b) and 13(c). Reference sign 1311 denotes an image obtained by capturing a white ball, reference sign 1312 denotes an image obtained by capturing a floor on which the white ball is placed, and reference sign 1313 denotes an image obtained by capturing a floor pattern (light blue line). Reference sign 1320 (set of gray dots surrounding the image 1311 obtained by capturing the white ball and including 1333, 1335, and 1336 in Figure 13(b)) denotes an outline detected from the part 1300 of the image.

In Figure 13(b), reference sign 1331 (a double circle illustrated with a dotted line) denotes a predetermined range from a center 1332 of a circle (1342 in Figure 13(c)) detected from the part 1300 of the image. The "outline positioned in the predetermined range from the center of the circle of interest" means an outline positioned between circles of the double circle 1331, which indicates that, for example, an outline denoted by 1333 is excluded from detection. This processing is intended to prevent false detection of an outline attributable to, for example, the floor pattern (which is the outline 1333). Reference sign 1334 denotes a line segment connecting the center 1332 and the center of another detected circle (not illustrated). Reference signs 1335 and 1336 denote outlines positioned on the line segment 1334 (also refer to Figure 13(a)). Thus, the plurality of outlines exist on the line segment 1334. In this case, for example, the outline 1336 is detected as an outline related to the detected circle 1342 through the "detection of an outline outermost from the center of the circle of interest among the outlines, in other words, an outline farthest from the center of the circle of interest, as an outline related to the circle of interest". This processing is intended to prevent false detection of an outline attributable to, for example, a pattern inside of a ball (which is the outline 1335).

In Figure 13(c), reference sign 1344 denotes a line segment connecting the center 1332 and the center of another detected circle (not illustrated). No outline is detected in the predetermined range from the center of the detected circle 1342 on the line segment 1344 (also refer to Figure 13(a)). The "detection of an intersection point between the circle of interest and the line segment as an outline" means, in this case, that an intersection point 1345 between the detected circle 1342 and the line segment 1344 is used as a detected outline.

Reference sign 336 denotes a distance measuring means, which may be included in the system 300, for measuring the distance between outlines positioned on a line segment connecting the center of a first circle of the detected circles and the center of a second circle of the detected circles and detected by the outline detecting means 335 in the specified image.

Reference sign 337 denotes a distance converting means, which may be included in the system 300, for converting the measured distance in the specified image into a distance in a predetermined unit by using a conversion coefficient.

The display means 340 described above can display the distance in the predetermined unit obtained by the distance converting means 337. In this case, the display means 340 may display the specified image stored by the specified image storing means 334 in an overlapping manner with the circle detected by the circle detecting means 331, indication corresponding to at least part of the outlines obtained by the outline detecting means 335, indication corresponding to the distance measured by the distance measuring means 336, and the distance in the predetermined unit obtained by the distance converting means 337. The screen 200 illustrated in Figure 2 is an exemplary screen displayed in this manner.

Reference sign 338 denotes a color specifying means, which may be included in the system 300, for specifying a color corresponding to a detected circle based on the specified image.

The color specified by the color specifying means 338 may be used by the outline detecting means 335. The outline detecting means 335 may detect a circle corresponding to a certain color by first trying to detect an outline from an image of a channel corresponding to the color, and trying, if no outline is detected, to detect an outline from an image of a different channel. For example, if a color corresponding to a certain circle is white, it is expected that the circle represents a white ball. Typically, the white ball is likely to be placed on a floor having a different brightness than the ball, and thus, in such a case, the outline detection may be first tried by preferentially using an image of the Y channel, and if the detection has failed, the outline detection may be tried again on an image of a different channel. Thus, the Y channel may be a channel corresponding to white. Similarly, the Cr channel and the Cb channel may be channels corresponding to red and blue, respectively.

### 2-2. Circle detecting means

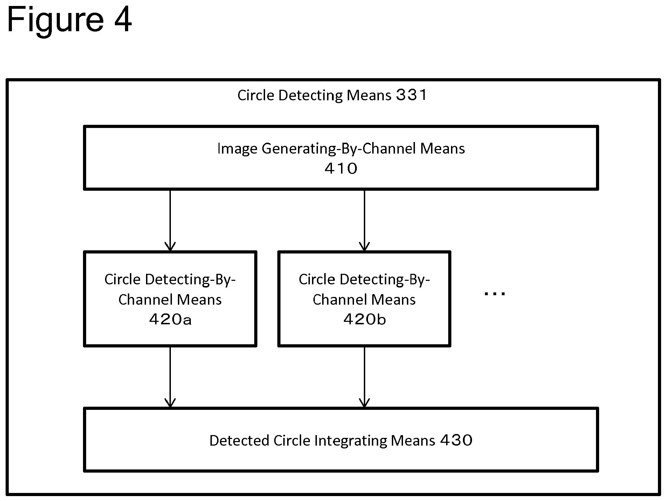

Figure 4 is a block diagram illustrating means that may be included in the circle detecting means 331 in more detail.

Reference sign 410 denotes an image generating-by-channel means for generating images of a plurality of channels based on a specified image. The channels may include two or more of the R channel, the G channel, the B channel, the Y channel, the Cr channel, the Cb channel, and any other channel.

In an exemplary image of the other channel, each pixel has a value obtained by performing gamma correction on the value of a corresponding pixel in the image of the R channel, the G channel, the B channel, the Y channel, the Cr channel, or the Cb channel.

In another exemplary image of the other channel, each pixel has a value obtained by performing gamma correction on the sum of: the absolute value of a difference between the value of a corresponding pixel in the image of the Cr channel and the median value of the values of all pixels of the image of the Cr channel; and the absolute value of a difference between the value of a corresponding pixel in the image of the Cb channel and the median value of the values of all pixels of the image of the Cb channel.

In another exemplary image of the other channel, each pixel has a value obtained by performing gamma correction on the absolute value of a difference between the value of a corresponding pixel in the image of the Y channel and the median value of the values of all pixels of the image of the Y channel.

Reference signs 420a, 420b, ... denote circle detecting-by-channel means for detecting circles having sizes in a predetermined range from the images of the respective channels generated by the image generating-by-channel means. In Figure 4, only the two circle detecting-by-channel means are explicitly illustrated, but the number of circle detecting-by-channel means is equal to the number of generated channel images as indicated by the dots "...".

Circles are detected from images of a plurality of channels because it is likely to happen that no circle is detected from an image of a certain channel due to a relation between the color of a ball and the color of a background (for example, a floor) on which the ball is placed, but a circle is detected from an image of another channel.

Reference sign 430 denotes a detected circle integrating means for integrating circles detected by the respective circle detecting-by-channel means 420a, 420b, .... At least if the distance between the centers of at least two circles detected from images of different channels, respectively, is equal to or smaller than a predetermined threshold, the detected circle integrating means 430 excludes, from the detected circles, any circle other than a circle having a size nearest to the average of the sizes of all circles detected from the images of the respective channels by the circle detecting-by-channel means among the at least two circles.

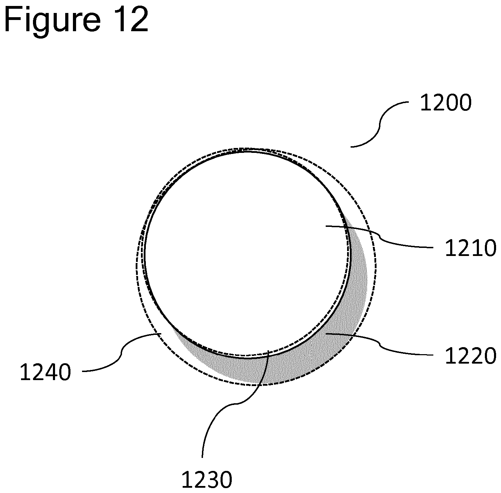

The following describes the technical meaning of the processing performed by the detected circle integrating means 430 with reference to Figure 12. Reference sign 1200 denotes an image obtained by capturing a ball in a certain color. Reference sign 1210 denotes part of the image, which corresponds to the ball, and reference sign 1220 denotes a part corresponding to the shadow of the ball. When circle detection is performed on such an image, a circle denoted by 1230 (dotted line) is detected from an image of a certain channel, and a circle denoted by 1240 (dotted line) is detected from an image of another channel, in some cases. In such a case, a circle to be detected is the circle denoted by 1230. If a plurality of balls is captured in the image, it is expected that a plurality of circles for the ball and any other ball are additionally detected in the images of the respective channels. The circles thus detected include a wrong circle such as that denoted by 1240 in some cases. However, it has been found that the average of the sizes of the detected circles is often close to the size of a circle to be detected if the balls have various colors but have identical sizes. For this reason, the detected circle integrating means 430 performs the above-described processing.

### 2-3. Color specifying means

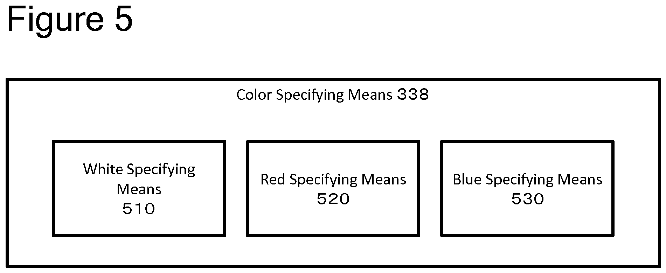

Figure 5 is a block diagram illustrating means that may be included in the color specifying means 338 in more detail.

Reference sign 510 denotes a white specifying means for specifying, as white, a color corresponding to, among detected circles, a circle positioned at a predetermined position. The predetermined position may be identical to the predetermined position used for determination by the first determination means 332.

Reference sign 520 denotes a red specifying means for specifying, as red, a color corresponding to, among circles detected from the image of the Cr channel from the specified image, a circle for which a value based on the value of at least one pixel inside of the circle in the image of the Cr channel is larger than a predetermined value and larger than a value obtained by multiplying, by a predetermined ratio, a value based on the value of a corresponding pixel in the image of the Cb channel from the specified image.

Reference sign 530 denotes a blue specifying means for specifying, as blue, a color corresponding to, among circles detected from the image of the Cb channel from the specified image, a circle for which a value based on the value of at least one pixel inside of the circle in the image of the Cb channel is larger than a predetermined value and larger than a value obtained by multiplying, by a predetermined ratio, a value based on the value of a corresponding pixel in the image of the Cr channel from the specified image.

The above-described "value based on the value of' a "pixel" is, for example, the value of the pixel if the pixel includes only one pixel, or the average value or median value of the values of a plurality of pixels if the pixel includes the plurality of pixels.

The above-described "corresponding pixel" is a pixel at a position in the image of the Cr (or Cb) channel, which is same as the position of at least one pixel in the image of Cb (or Cr) channel. For example, if the at least one pixel is included in a rectangle having four corners at coordinates (x0, y0), (x1, y0), (x0, y1), and (x1, y1) in the image of Cb (or Cr) channel, the corresponding pixel is included in a rectangle having four corners at coordinates (x0, y0), (x1, y0), (x0, y1), and (x1, y1) in the image of the Cr (or Cb) channel.

If a pixel takes a value in the range of 0 to 255, the above-described "predetermined value" and "predetermined ratio" may be 192 and 125% approximately, respectively.

The color specifying means 338 thus configured is useful particularly if a spherical object included in measurement is a ball in white, red, or blue.

### 2-4. Other means

An output image from the image capturing means 310 usually includes noise attributable to a characteristic of the image capturing means 310 (for example, a characteristic of a sensor of the camera) or an object an image of which is captured (for example, a wood grain of a floor or a fine pattern of a carpet). Thus, when detecting circles, detecting outlines, generation of images of a plurality of channels, specifying colors, and the like are performed based on various images as described above, processing of removing the noise from the image may be performed by a means not illustrated in advance. This noise removal processing includes, for example, Gaussian blurring and bilateral filtering.

In the Gaussian blurring, the range of blurring can be adjusted by using a parameter "sigma". The sigma is set to be large when it is assumed that a relatively large pattern such as a wood grain is captured in the image, or the sigma is set to be small when it is assumed that a fine pattern is captured in the image in such a case with a carpet.

The bilateral filtering performs smoothing while maintaining outline as much as possible, and has a parameter "sigmaSpace", which is similar to the sigma in the Gaussian blurring, and a parameter "sigmaColor" for specifying the range of a color gamut in which the blurring is applied (similarity of colors to be blurred).

As described above, the circle detection can use the well-known Hough conversion. In the Hough conversion, which is based on the concept of voting, when the number of votes is larger than a threshold, a circle related to the votes is detected. As described above, the outline detection can use the well-known Canny algorithm. In the Canny algorithm, determination of an outline is performed by using a threshold. When the threshold is sets to be large, only a clear outline is detected, and as a result, the number of detected outlines becomes smaller.

However, an appropriate threshold is different between images. For example, whether a captured image is an object or not, for example, a ball or a floor highly clearly appears in the image of the Y channel. This is because the ball and the floor have relatively different brightness. However, this is not true in the images of the Cr channel and the Cb channel.

Thus, in the circle detection, a high threshold is preferably set for the image of the Y channel, and a low threshold is preferably set for the images of the Cr and Cb channels. In the outline detection, too, a high threshold is preferably set for the image of the Y channel to extract a clear outline only, and a low threshold is set for the images of the Cr and Cb channels to extract an unclear outline while preventing an extraction miss.

Optimum values of the parameters and thresholds as described above differ depending on the state (such as color, gradation of wood grains, smoothness of a floor, dirt, or reflection of illumination) of a plane (such as the ground, a carpet, or the floor of a gymnasium) on which a captured object is placed, and the color (slight difference within the same color) of the captured object (such as a ball).

For this reason, the system 300 may include an input means (not illustrated) for performing switching between a plurality of sets of parameters and thresholds stored in advance. Further, the system 300 may, for one specified image stored by the specified image storing means 334, sequentially switch between a plurality of sets of parameters and thresholds to perform processing up to the calculation of a distance in a predetermined unit by the distance converting means 337, and sequentially display a screen corresponding to the screen 200 illustrated in Figure 2 on the display means 340.

### 3. Second embodiment of the present invention

The following describes a method for inter-spherical-object distance measurement as an exemplary embodiment of the present invention. This method is performed by a computer. Description of the "computer" will be given in Section 4 below.

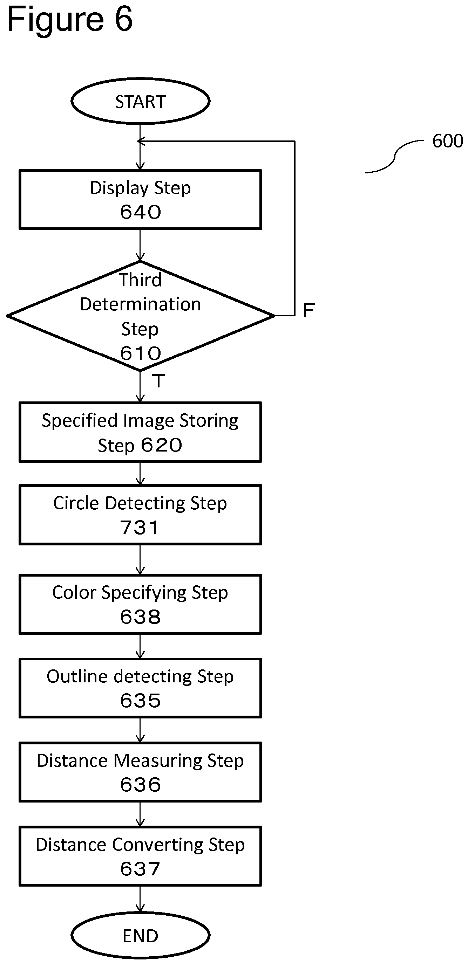

Figure 6 is a flowchart illustrating main steps included in the method 600. The method 600 may exclude part of the steps and include an additional step not illustrated, and the execution order of the steps is not limited to that illustrated.

Reference sign 610 denotes a step of determining whether two determinations at two determination steps are both true. For sake of simplicity, the two determination steps are referred to as a first determination step and a second determination step, and the determination step 610 is referred to as a third determination step. When the determination at the third determination step 610 is true (T), the process proceeds to step 620. When the determination at the third determination step 610 is false (F), the third determination step 610 is repeated as a result in the present example, but another example is not limited to such processing. The first determination step, the second determination step, and the third determination step can be performed independently from each other. Thus, these three determination steps may be executed in any order.

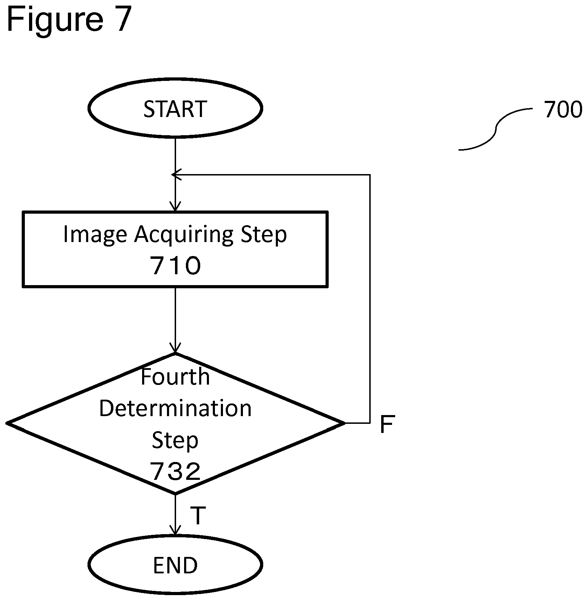

The following describes the first determination step with reference to Figure 7. The first determination step refers to the whole of a flowchart 700 illustrated in Figure 7.

Reference sign 710 denotes an image acquiring step of acquiring an output image from a camera. Although the optical system of the camera typically has specific aberration, the "output image" acquired from the camera may be an image obtained by correcting at least part of such aberration by the well-known method.

Reference sign 732 denotes a determination step of determining whether an image of a spherical object having a predetermined size is captured at a predetermined position in the acquired output image. For sake of simplicity, the determination step 732 is referred to as a fourth determination step. A determination method at the fourth determination step 732 may be same as that used by the first determination means 332. When the determination at the fourth determination step 732 is true (T), the entire determination at the first determination step 700 is true, and then the first determination step 700 ends. When the determination at the fourth determination step 732 is false (F), the process returns to the step 710 in the present example, but another example is not limited to such processing.

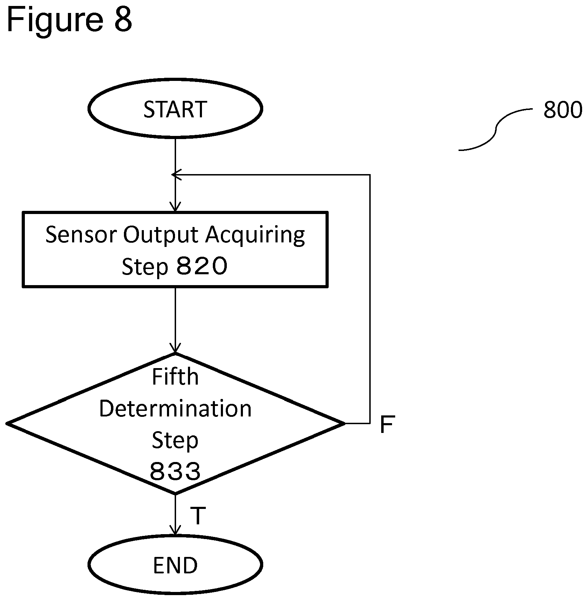

The following describes the second determination step with reference to Figure 8. The second determination step refers to the whole of a flowchart 800 illustrated in Figure 8.

Reference sign 820 denotes a sensor output acquiring step of acquiring, from the sensor, an output depending on the tilt of the optical axis of the optical system of a camera. This camera is also used to acquire the output image at the step 710.

Reference sign 833 denotes a determination step of determining whether a plane perpendicular to the optical axis of the optical system of the camera is horizontal by using the output acquired at the sensor output acquiring step 820. For sake of simplicity, the determination step 833 is referred to as a fifth determination step. When the determination at the fifth determination step 833 is true (T), the entire determination at the second determination step 800 is true, and then the second determination step 800 ends. When the determination at the fifth determination step 833 is false (F), the process returns to the step 820 in the present example, but another example is not limited to such processing.

In Figure 6, reference sign 620 denotes a specified image storing step of automatically storing the output image from the camera as a specified image when the determination at the third determination step 610 is true.

Importantly, the process proceeds to the specified image storing step 620 when it is determined that an image of a spherical object having the predetermined size is captured at the predetermined position in the acquired output image and when it is determined that the plane perpendicular to the optical axis of the optical system of the camera is horizontal. Accordingly, at this time the processing requires both of the determination at the first determination step 700 and the determination at the second determination step 800 to be true in the present example, but another example may be configured differently (for example, the condition is satisfied when the determination at the first determination step 700 and the determination at the second determination step 800 are both false).

Reference sign 640 denotes a display step, which may be included in the method 600, of displaying on the display, overlapping a circle having a predetermined size and indication depending on the tilt of the optical axis of the camera, the output image from the camera. Processing performed at the display step 640 corresponds to the processing performed by the display means 340. The output image from the camera and the tilt of the optical axis of the camera, which are used at the display step 640, may be those acquired at the image acquiring step 710 and the sensor output acquiring step 820, respectively, which are performed independently from and immediately before this step.

Reference sign 731 denotes a circle detecting step of detecting, based on the specified image, circles having sizes in a predetermined range in the image. Processing performed at this step corresponds to the processing performed by the circle detecting means 331 described above.

Reference sign 638 denotes a color specifying step that may be included in the method 600. Processing performed at this step corresponds to the processing performed by the color specifying means 338 described above.

Reference sign 635 denotes an outline detecting step that may be included in the method 600. Processing performed at this step corresponds to the processing performed by the outline detecting means 335 described above.

Reference sign 636 denotes a distance measuring step that may be included in the method 600. Processing performed at this step corresponds to the processing performed by the distance measuring means 336 described above.

Reference sign 637 denotes a distance converting step that may be included in the method 600. Processing performed at this step corresponds to the processing performed by the distance converting means 337 described above.

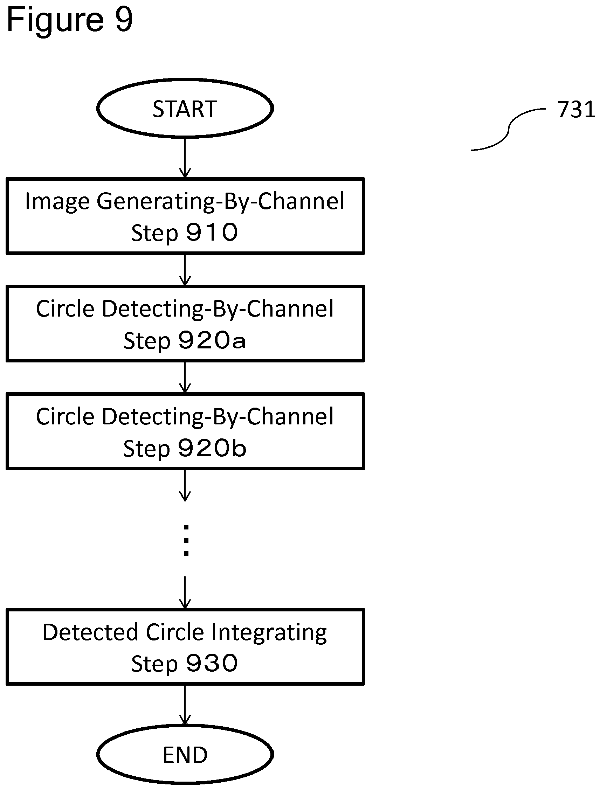

Figure 9 is a flowchart illustrating steps that may be included in the circle detecting step 731 in more detail.

Reference sign 910 denotes an image generating-by-channel step. Processing performed at this step corresponds to the processing performed by the image generating-by-channel means 410 described above.

Reference signs 920a, 920b, ... denote circle detecting-by-channel steps. Processing performed at these steps corresponds to the processing performed by the circle detecting-by-channel means 420a, 420b, ... described above. In Figure 9, only the two circle detecting-by-channel steps are explicitly illustrated, but the number of circle detecting-by-channel steps is equal to the number of generated channel images as indicated by the dots "...". In Figure 9, the step 920b is performed after the step 920a, but these circle detecting-by-channel steps may be performed in parallel or simultaneously with each other.

Reference sign 930 denotes a detected circle integrating step. Processing performed at this step corresponds to the processing performed by the detected circle integrating means 430.

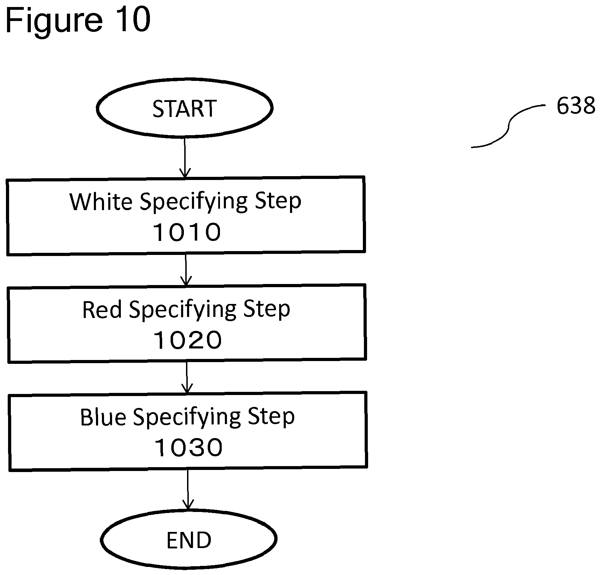

Figure 10 is a flowchart illustrating steps that may be included in the color specifying step 638 in more detail. Reference signs 1010, 1020 and 1030 denote a white specifying step, a red specifying step, and a blue specifying step, respectively. Processing performed at these steps corresponds to the processing performed by the white specifying means 510, the red specifying means 520, and the blue specifying means 530 described above, respectively. In Figure 10, the step 1010, the step 1020, and the step 1030 are performed in this order, but the execution order is not limited thereto, and the steps may be performed in parallel or simultaneously with each other.

### 4. Third embodiment of the present invention

Another embodiment of the present invention is a computer program, or instructions, or a computer-readable storage medium storing the computer program or instructions, which causes a computer to perform the method for inter-spherical-object distance measurement.

The "computer" means one or more computers, and may be a stationary or mobile type. Examples of stationary computers include a desktop computer, a work station, and a rack-mount computer, and examples of mobile computers include a laptop computer, a smartphone, and a tablet.

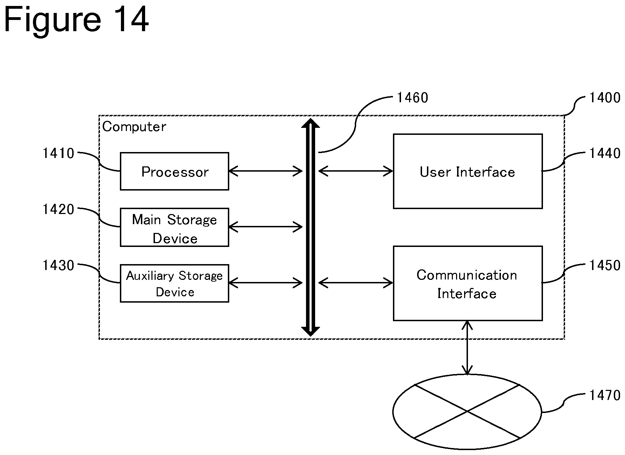

Figure 14 illustrates an exemplary hardware configuration of the computer. As illustrated in FIG 14, this computer 1400 mainly includes a processor 1410, a main storage device 1420, an auxiliary storage device 1430, a user interface 1440, and a communication interface 1450. These components are mutually connected through bus lines 1460 including, for example, an address bus, a data bus, and a control bus. An interface circuit (not illustrated) may be interposed between the bus lines 1460 and each of the hardware resources as appropriate.

The processor 1410 performs entire control of the computer.

The main storage device 1420 is a volatile memory such as an SRAM or a DRAM that provides a work area to the processor 1410.

The auxiliary storage device 1430 is, for example, a non- volatile memory, such as a hard disk drive or a flash memory, for storing, a computer program as software or the like and various kinds of data. This computer program is loaded from the auxiliary storage device 1430 onto the main storage device 1420 through the bus lines 1460 at any timing.

The user interface 1440 performs one or both of presentation of information to the user and reception of information input from the user, and is, for example, a keyboard, a mouse, a display, a touch panel display, a microphone, or a speaker.

The communication interface 1450 is connected with a network 1470 to communicate data through the network 1470. The communication interface 1450 is connected with the network 1470 in a wired or wireless manner.

### 4. Conclusion

Although the embodiments of the present invention are described above, any other similar aspect is applicable and change or addition of any aspect may be achieved as appropriate.

## Claims

1. A system (300) comprising:
a movable image capturing means (310) having an optical axis;
a sensing means (320) for providing an output depending on a tilt of the optical axis;
a first determination means (332) for determining whether an image of a spherical object having a predetermined size is captured at a predetermined position in an output image from the image capturing means;
a second determination means (333) for, using the output from the sensing means, determining whether a plane perpendicular to the optical axis is horizontal, and
a means (334) for automatically storing an output image from the image capturing means as a specified image when:
it is determined that an image of a spherical object having the predetermined size is captured at the predetermined position in the output image; and
it is determined that a plane perpendicular to the optical axis is horizontal using the output from the sensing means (320).

2. The system (300) according to claim 1, further comprising:
a display means (340) for, overlapping a circle having the predetermined size and indication depending on a tilt of the optical axis, displaying an output image from the image capturing means, the circle being displayed at the predetermined position in the output image.

3. The system (300) according to claim 2, wherein:
the first determination means (332) determines whether an image of a spherical object having the predetermined size is captured at the predetermined position in the output image by comparing a value based on the luminance value of at least one pixel inside of the circle displayed in the overlapping manner in the output image with a value based on the luminance value of at least one pixel outside of the circle.

4. The system (300) according to any one of claims 1 to 3, further comprising:
a circle detecting means (331) for, based on the specified image, detecting circles having sizes in a first predetermined range in each of the plurality of channel images;
an outline detecting means (335) for, based on the specified image, detecting, for each circle of the detected circles, an outline related to the circle of the detected circles, the detected outline positioned on a line segment connecting the center of the circle of the detected circles and the center of another of the detected circles, and positioned in a second predetermined range from the center of the circle of the detected circles, and, if a plurality of such outlines exist, positioned outermost from the center of the circle of the detected circles; and
a means (336) for measuring a distance in the specified image between the detected outlines that are positioned on a line segment connecting the center of a first circle of the detected circles and the center of a second circle of the detected circles, and that are related to the first circle and the second circle.

5. The system (300) according to claim 4, further comprising:
a means (337) for, using a conversion coefficient, converting the measured distance into a distance in a predetermined unit, wherein the display means (340) displays the distance in the predetermined unit.

6. The system (300) according to claim 4 or 5, wherein the circle detecting means (331) comprises:
an image generating-by-channel means (410) for, based on the specified image, generating images of a plurality of channels;
circle detecting-by-channel means (420a, 420b) for, from the images of the respective channels generated by the image generating-by-channel means, detecting circles having sizes in the first predetermined range; and
a means (430) for, if the distance between the centers of at least two circles detected respectively from images of different channels by the circle detecting-by-channel means is equal to or smaller than a predetermined threshold, excluding, from the detected circles, any circle other than, among the at least two circles, a circle having a size nearest to the average of the sizes of all circles detected from the images of the respective channels by the circle detecting-by-channel means.

7. The system (300) according to claim 6, wherein
the plurality of channels include two or more of an R channel, a G channel, a B channel, a Y channel, a Cr channel, a Cb channel, a first composite channel, and a second composite channel;
each pixel in an image of the first composite channel has a value obtained by performing gamma correction on the sum of:
the absolute value of a difference between the value of a corresponding pixel in an image of the Cr channel and the median value of the values of all pixels of the image of the Cr channel, and
the absolute value of a difference between the value of a corresponding pixel in an image of the Cb channel and the median value of the values of all pixels of the image of the Cb channel; and
each pixel in an image of the second composite channel has a value obtained by performing gamma correction on the absolute value of a difference between the value of a corresponding pixel in an image of the Y channel and the median value of the values of all pixels of the image of the Y channel.

8. The system (300) according to claim 6 or 7, further comprising:
a color specifying means (338) for, based on the specified image, specifying a color corresponding to at least one of the detected circles, wherein, when a circle corresponding to a color is detected, the outline detecting means tries to detect an outline from an image of a channel corresponding to the color, and, if no outline is detected, tries to detect an outline from an image of a different channel.

9. The system (300) according to claim 8, wherein the color specifying means (338) comprising one or more of:
a means (510) for specifying as white a color corresponding to, among the detected circles, a circle at the predetermined position;
a means (520) for specifying as red a color corresponding to, among circles detected from an image of the Cr channel from the specified image, a circle for which a value based on the value of at least one pixel inside of the circle in the image of the Cr channel is larger than a predetermined value and larger than a value obtained by multiplying, by a predetermined ratio, a value based on the value of a corresponding pixel in an image of the Cb channel from the specified image; and
a means (530) for specifying as blue a color corresponding to, among circles detected from an image of the Cb channel from the specified image, a circle for which a value based on the value of at least one pixel inside of the circle in the image of the Cb channel is larger than a predetermined value and larger than a value obtained by multiplying, by a predetermined ratio, a value based on the value of a corresponding pixel in an image of the Cr channel from the specified image.

10. A method (600) performed by a computer comprising:
a first determination step (700) comprising:
acquiring from a camera an output image; and
determining whether an image of a spherical object having a predetermined size is captured at a predetermined position in the output image; and
a second determination step (800) comprising:
acquiring from a sensor (320) an output depending on a tilt of an optical axis of an optical system in the camera; and
determining, using the output, whether a plane perpendicular to the optical axis is horizontal; and
a step (610, 620) of automatically storing an output image from the camera as a specified image when:
it is determined that an image of a spherical object having the predetermined size is captured at the predetermined position in the output image; and
it is determined that a plane perpendicular to the optical axis is horizontal using the output from the sensor (320).

11. The method (600) according to claim 10, further comprising:
displaying (640) on a display, overlapping a circle having the predetermined size and indication depending on a tilt of the optical axis, an output image from the camera, the circle being displayed at the predetermined position in the output image.

12. The method (600) according to claim 11, wherein:
the first determination step (700) includes determining whether an image of a spherical object having the predetermined size is captured at the predetermined position in the output image by comparing a value based on the luminance value of at least one pixel inside of the circle displayed in the overlapping manner in the output image with a value based on the luminance value of at least one pixel outside of the circle.

13. The method (600) according to any one of claims 10 to 12, further comprising:
a circle detecting step (731) of, based on the specified image, detecting circles having sizes in a first predetermined range in each of the plurality of channel images;
an outline detecting step (635) of, based on the specified image, detecting, for each circle of the detected circles, an outline related to the circle of the detected circles, the detected outline positioned on a line segment connecting the center of the circle of the detected circles and the center of another of the detected circles, and positioned in a second predetermined range from the center of the circle of the detected circles, and, if a plurality of such outlines exist, positioned outermost from the center of the circle of the detected circles; and
a step (636) of measuring a distance in the specified image between the detected outlines that are positioned on a line segment connecting the center of a first circle of the detected circles and the center of a second circle of the detected circles, and that are related to the first circle and the second circle.

14. The method (600) according to claim 13, further comprising:
a step (637) of, using a conversion coefficient, converting the measured distance into a distance in a predetermined unit; and
a step of displaying in a display the distance in the predetermined unit.

15. The method (600) according to claim 13 or 14, wherein the circle detecting step (731) includes:
an image generating-by-channel step (910) of, based on the specified image, generating images of a plurality of channels;
circle detecting-by-channel steps (920a, 920b) of, from the images of the respective channels generated in image generating-by-channel step, detecting circles having sizes in the first predetermined range; and
a step (930) of, if the distance between the centers of at least two circles respectively detected from images of different channels in the circle detecting-by-channel steps (920a, 920b) is equal to or smaller than a predetermined threshold, exclude, from the detected circles, any circle other than, among the at least two circles, a circle having a size nearest to the average of the sizes of all circles detected from the images of the respective channels in the circle detecting-by-channel steps (920a, 920b).

16. The method (600) according to claim 15, wherein
the plurality of channels include two or more of an R channel, a G channel, a B channel, a Y channel, a Cr channel, a Cb channel, a first composite channel, and a second composite channel;
each pixel in an image of the first composite channel has a value obtained by performing gamma correction on the sum of:
the absolute value of a difference between the value of a corresponding pixel in an image of the Cr channel and the median value of the values of all pixels of the image of the Cr channel, and
the absolute value of a difference between the value of a corresponding pixel in an image of the Cb channel and the median value of the values of all pixels of the image of the Cb channel; and
each pixel in an image of the second composite channel has a value obtained by performing gamma correction on the absolute value of a difference between the value of a corresponding pixel in an image of the Y channel and the median value of the values of all pixels of the image of the Y channel.

17. The method (600) according to claim 15 or 16, further comprising:
a color specifying step (638) of, based on the specified image, specifying a color corresponding to at least one of the detected circles, wherein, when a circle corresponding to a color is detected, the outline detecting step comprising trying to detect an outline from an image of a channel corresponding to the color, and, if no outline is detected, trying to detect an outline from an image of a different channel.

18. The method (600) according to claim 17, wherein the color specifying step (638) includes one or more of:
specifying (1010) as white a color corresponding to, among the detected circles, a circle at the predetermined position;
specifying (1020) as red a color corresponding to, among circles detected from an image of the Cr channel from the specified image, a circle for which a value based on the value of at least one pixel inside of the circle in the image of the Cr channel is larger than a predetermined value and larger than a value obtained by multiplying, by a predetermined ratio, a value based on the value of a corresponding pixel in an image of the Cb channel from the specified image; and
specifying (1030) as blue a color corresponding to, among circles detected from an image of the Cb channel from the specified image, a circle for which a value based on the value of at least one pixel inside of the circle in the image of the Cb channel is larger than a predetermined value and larger than a value obtained by multiplying, by a predetermined ratio, a value based on the value of a corresponding pixel in an image of the Cr channel from the specified image.

19. A computer program causing a computer to perform the method according to any one of claims 10 to 18.

## Patentansprüche

1. System (300), umfassend:
ein bewegbares Bildaufnahmemittel (310) mit einer optischen Achse;
ein Erfassungsmittel (320) zum Bereitstellen eines Ausgangs in Abhängigkeit von einer Neigung der optischen Achse;
ein erstes Bestimmungsmittel (332) zum Bestimmen, ob ein Bild eines sphärischen Objekts mit einer vorbestimmten Größe an einer vorbestimmten Position in einem Ausgangsbild von dem Bildaufnahmemittel aufgenommen wird;
ein zweites Bestimmungsmittel (333), um unter Verwendung des Ausgangs von dem Erfassungsmittel zu bestimmen, ob eine Ebene senkrecht zur optischen Achse horizontal ist, und
ein Mittel (334) zum automatischen Speichern eines Ausgangsbildes von dem Bildaufnahmemittel als ein spezifiziertes Bild, wenn:
bestimmt wird, dass ein Bild eines sphärischen Objekts mit der vorbestimmten Größe an der vorbestimmten Position in dem Ausgangsbild aufgenommen wird; und
bestimmt wird, dass eine Ebene senkrecht zur optischen Achse horizontal ist, wobei der Ausgang von dem Erfassungsmittel (320) verwendet wird.

2. System (300) nach Anspruch 1, ferner umfassend
ein Anzeigemittel (340), um unter Überlappung eines Kreises mit der vorbestimmten Größe und Angabe in Abhängigkeit von einer Neigung der optischen Achse ein Ausgangsbild von dem Bildaufnahmemittel anzuzeigen, wobei der Kreis an der vorbestimmten Position in dem Ausgangsbild angezeigt wird.

3. System (300) nach Anspruch 2, wobei:
das erste Bestimmungsmittel (332) bestimmt, ob ein Bild eines sphärischen Objekts mit der vorbestimmten Größe an der vorbestimmten Position in dem Ausgangsbild aufgenommen wird, indem ein Wert basierend auf dem Luminanzwert von mindestens einem Pixel innerhalb des Kreises, der in der überlappenden Weise in dem Ausgangsbild angezeigt wird, mit einem Wert verglichen wird, der auf dem Luminanzwert von mindestens einem Pixel außerhalb des Kreises basiert.

4. System (300) nach einem der Ansprüche 1 bis 3, ferner umfassend:
ein Kreisdetektionsmittel (331), um basierend auf dem spezifizierten Bild Kreise mit Größen in einem ersten vorbestimmten Bereich in jedem der Vielzahl von Kanalbildern zu ermitteln;
ein Umrissdetektionsmittel (335), um basierend auf dem spezifizierten Bild für jeden Kreis der ermittelten Kreise einen Umriss in Bezug auf den Kreis der ermittelten Kreise zu ermitteln, wobei der ermittelte Umriss auf einem Liniensegment positioniert ist, das die Mitte des Kreises der ermittelten Kreise und die Mitte eines anderen der ermittelten Kreise verbindet, und in einem zweiten vorbestimmten Bereich von der Mitte des Kreises der ermittelten Kreise positioniert ist, und, wenn eine Vielzahl solcher Umrisse existiert, am weitesten außen von der Mitte des Kreises der ermittelten Kreise positioniert ist; und
ein Mittel (336) zum Messen eines Abstands in dem spezifizierten Bild zwischen den ermittelten Umrissen, die auf einem Liniensegment positioniert sind, das die Mitte eines ersten Kreises der ermittelten Kreise und die Mitte eines zweiten Kreises der ermittelten Kreise verbindet, und die mit dem ersten Kreis und dem zweiten Kreis in Beziehung stehen.

5. System (300) nach Anspruch 4, ferner umfassend:
ein Mittel (337), um unter Verwendung eines Umrechnungskoeffizienten den gemessenen Abstand in einen Abstand in einer vorbestimmten Einheit umzuwandeln, wobei das Anzeigemittel (340) den Abstand in der vorbestimmten Einheit anzeigt.

6. System (300) nach Anspruch 4 oder 5, wobei das Kreisdetektionsmittel (331) Folgendes umfasst:
ein kanalweises Bilderzeugungsmittel (410) zur Erzeugung von Bildern einer Vielzahl von Kanälen basierend auf dem spezifizierten Bild;
ein kanalweises Kreisdetektionsmittel (420a, 420b), um aus den Bildern der jeweiligen Kanäle, die von der kanalweise Bilderzeugungseinrichtung erzeugt werden, Kreise mit Größen in dem ersten vorbestimmten Bereich zu erfassen; und
ein Mittel (430), um, wenn der Abstand zwischen den Mitten von mindestens zwei Kreisen, die jeweils von Bildern verschiedener Kanäle durch das kanalweise Kreisdetektionsmittel ermittelt werden, gleich oder kleiner als ein vorbestimmter Schwellenwert ist, von den ermittelten Kreisen jeden Kreis auszuschließen, außer einen Kreis unter den mindestens zwei Kreisen mit einer Größe, die dem Durchschnitt der Größen aller Kreise, die von den Bildern der jeweiligen Kanäle durch das kanalweise Kreisdetektionsmittel ermittelt werden, am nächsten kommt.

7. System (300) nach Anspruch 6, wobei
die Vielzahl von Kanälen zwei oder mehrere von einem R-Kanal, einem G-Kanal, einem B-Kanal, einem Y-Kanal, einem Cr-Kanal, einem Cb-Kanal, einem ersten zusammengesetzten Kanal und einem zweiten zusammengesetzten Kanal umfasst;
jedes Pixel in einem Bild des ersten zusammengesetzten Kanals einen Wert hat, der erhalten wird durch das Ausführen einer Gammakorrektur an der Summe von:
dem absoluten Wert einer Differenz zwischen dem Wert eines entsprechenden Pixels in einem Bild des Cr-Kanals und dem Mittelwert der Werte aller Pixel des Bildes des Cr-Kanals und
dem absoluten Wert einer Differenz zwischen dem Wert eines entsprechenden Pixels in einem Bild des Cb-Kanals und dem Mittelwert der Werte aller Pixel des Bildes des Cb-Kanals; und
jedes Pixel in einem Bild des zweiten zusammengesetzten Kanals einen Wert hat, der erhalten wird durch das Ausführen einer Gammakorrektur an dem absoluten Wert einer Differenz zwischen dem Wert eines entsprechenden Pixels in einem Bild des Y-Kanals und dem Mittelwert der Werte aller Pixel des Bildes des Y-Kanals.

8. System (300) nach Anspruch 6 oder 7, ferner umfassend:
ein Farbspezifizierungsmittel (338), um basierend auf dem spezifizierten Bild eine Farbe zu spezifizieren, die mindestens einem der ermittelten Kreise entspricht, wobei, wenn ein Kreis, der einer Farbe entspricht, ermittelt wird, das Umrissdetektionsmittel versucht, einen Umriss von einem Bild eines Kanals zu ermitteln, der der Farbe entspricht, und, wenn kein Umriss ermittelt wird, versucht, einen Umriss von einem Bild eines anderen Kanals zu ermitteln.

9. System (300) nach Anspruch 8, wobei das Farbspezifizierungsmittel (338) eines oder mehrere der folgenden Elemente umfasst:
ein Mittel (510) zum Spezifizieren einer Farbe als weiß, die unter den ermittelten Kreisen einem Kreis an der vorbestimmten Position entspricht;
ein Mittel (520) zum Spezifizieren einer Farbe als rot, die unter den von einem Bild des Cr-Kanals von dem spezifizierten Bild ermittelten Kreisen einem Kreis entspricht, für den ein Wert, der auf dem Wert von mindestens einem Pixel innerhalb des Kreises in dem Bild des Cr-Kanals basiert, größer als ein vorbestimmter Wert und größer als ein Wert ist, der durch Multiplizieren eines Wertes, der auf dem Wert eines entsprechenden Pixels in einem Bild des Cb-Kanals von dem spezifizierten Bild basiert, mit einem vorbestimmten Verhältnis erhalten wird; und
ein Mittel (530) zum Spezifizieren einer Farbe als blau, die unter Kreisen, die von einem Bild des Cb-Kanals von dem spezifizierten Bild ermittelt werden, einem Kreis entspricht, für den ein Wert, der auf dem Wert von mindestens einem Pixel innerhalb des Kreises in dem Bild des Cb-Kanals basiert, größer als ein vorbestimmter Wert und größer als ein Wert ist, der durch Multiplizieren eines Wertes, der auf dem Wert eines entsprechenden Pixels in einem Bild des Cr-Kanals von dem spezifizierten Bild basiert, mit einem vorbestimmten Verhältnis erhalten wird.

10. Verfahren (600), das von einem Computer ausgeführt wird, umfassend:
einen ersten Bestimmungsschritt (700), umfassend:
Erfassen eines Ausgangsbilds von einer Kamera; und
Bestimmen, ob ein Bild eines sphärischen Objekts mit einer vorbestimmten Größe an einer vorbestimmten Position in dem Ausgangsbild aufgenommen wird; und einen zweiten Bestimmungsschritt (800), umfassend:
Erfassen eines Ausgangs von einem Sensor (320) in Abhängigkeit von einer Neigung einer optischen Achse eines optischen Systems in der Kamera; und
Bestimmen, unter Verwendung des Ausgangs, ob eine Ebene senkrecht zur optischen Achse horizontal ist; und
einen Schritt (610, 620) des automatischen Speicherns eines Ausgangsbilds von der Kamera als ein spezifiziertes Bild, wenn:
bestimmt wird, dass ein Bild eines sphärischen Objekts mit der vorbestimmten Größe an der vorbestimmten Position in dem Ausgangsbild aufgenommen wird; und
unter Verwendung des Ausgangs von dem Sensor (320) bestimmt wird, dass eine Ebene senkrecht zur optischen Achse horizontal ist.

11. Verfahren (600) nach Anspruch 10, ferner umfassend:
Anzeigen (640) auf einer Anzeige, die einen Kreis mit der vorbestimmten Größe und Angabe in Abhängigkeit von einer Neigung der optischen Achse überlappt, eines Ausgangsbilds von der Kamera, wobei der Kreis an der vorbestimmten Position in dem Ausgangsbild angezeigt wird.

12. Verfahren (600) nach Anspruch 11, wobei:
der erste Bestimmungsschritt (700) das Bestimmen einschließt, ob ein Bild eines sphärischen Objekts mit der vorbestimmten Größe an der vorbestimmten Position in dem Ausgangsbild aufgenommen wird, indem ein Wert basierend auf dem Luminanzwert von mindestens einem Pixel innerhalb des Kreises, der in der überlappenden Weise in dem Ausgangsbild angezeigt wird, mit einem Wert basierend auf dem Luminanzwert von mindestens einem Pixel außerhalb des Kreises verglichen wird.

13. Verfahren (600) nach einem der Ansprüche 10 bis 12, ferner umfassend:
einen Kreisdetektionsschritt (731) zum Ermitteln von Kreisen mit Größen in einem ersten vorbestimmten Bereich in jedem der Vielzahl von Kanalbildern basierend auf dem spezifizierten Bild;
einen Umrissdetektionsschritt (635) zum Ermitteln, basierend auf dem spezifizierten Bild, für jeden Kreis der ermittelten Kreise eines Umrisses in Bezug auf den Kreis der ermittelten Kreise, wobei der ermittelte Umriss auf einem Liniensegment positioniert ist, das die Mitte des Kreises der ermittelten Kreise und die Mitte eines anderen der ermittelten Kreise verbindet, und in einem zweiten vorbestimmten Bereich von der Mitte des Kreises der ermittelten Kreise positioniert ist, und, wenn eine Vielzahl solcher Umrisse existieren, am weitesten außen von der Mitte des Kreises der ermittelten Kreise positioniert ist; und
einen Schritt (636) des Messens eines Abstands in dem spezifizierten Bild zwischen den erfassten Umrissen, die auf einem Liniensegment positioniert sind, das den Mittelpunkt eines ersten Kreises der erfassten Kreise und den Mittelpunkt eines zweiten Kreises der erfassten Kreise verbindet, und die mit dem ersten Kreis und dem zweiten Kreis in Beziehung stehen.

14. Verfahren (600) nach Anspruch 13, ferner umfassend:
einen Schritt (637) zum Umwandeln des gemessenen Abstands unter Verwendung eines Umrechnungskoeffizienten in einen Abstand in einer vorbestimmten Einheit; und
einen Schritt des Anzeigens des Abstands in der vorbestimmten Einheit in einer Anzeige.

15. Verfahren (600) nach Anspruch 13 oder 14, wobei der Kreisdetektionsschritt (731) Folgendes umfasst:
einen kanalweisen Bilderzeugungsschritt (910) zum Erzeugen von Bildern einer Vielzahl von Kanälen basierend auf dem spezifizierten Bild;
kanalweise Kreisdetektionsschritte (920a, 920b) zum Ermitteln von Kreisen mit Größen in dem ersten vorbestimmten Bereich von den Bildern der jeweiligen Kanäle, die im kanalweisen Bilderzeugungsschritt erzeugt werden,
einen Schritt (930), bei dem, wenn der Abstand zwischen den Mitten von mindestens zwei Kreisen, die jeweils von Bildern verschiedener Kanäle in den kanalweisen Kreisdetektionsschritten (920a, 920b) ermittelt werden, gleich oder kleiner als ein vorbestimmter Schwellenwert ist, von den ermittelten Kreisen jeder Kreis ausgeschlossen wird, außer ein Kreis unter den mindestens zwei Kreisen mit einer Größe, die dem Durchschnitt der Größen aller Kreise am nächsten kommt, die von den Bildern der jeweiligen Kanäle in den kanalweisen Kreisdetektionsschritten (920a, 920b) ermittelt werden.

16. Verfahren (600) nach Anspruch 15, wobei
die Vielzahl von Kanälen zwei oder mehrere von einem R-Kanal, einem G-Kanal, einem B-Kanal, einem Y-Kanal, einem Cr-Kanal, einem Cb-Kanal, einem ersten zusammengesetzten Kanal und einem zweiten zusammengesetzten Kanal umfasst;
jedes Pixel in einem Bild des ersten zusammengesetzten Kanals einen Wert hat, der erhalten wird durch Ausführen einer Gammakorrektur an der Summe von:
dem absoluten Wert einer Differenz zwischen dem Wert eines entsprechenden Pixels in einem Bild des Cr-Kanals und dem Mittelwert der Werte aller Pixel des Bildes des Cr-Kanals und
dem absoluten Wert einer Differenz zwischen dem Wert eines entsprechenden Pixels in einem Bild des Cb-Kanals und dem Mittelwert der Werte aller Pixel des Bildes des Cb-Kanals; und
jedes Pixel in einem Bild des zweiten zusammengesetzten Kanals einen Wert hat, der erhalten wird durch das Ausführen einer Gammakorrektur an dem absoluten Wert einer Differenz zwischen dem Wert eines entsprechenden Pixels in einem Bild des Y-Kanals und dem Mittelwert der Werte aller Pixel des Bildes des Y-Kanals.

17. Verfahren (600) nach Anspruch 15 oder 16, ferner umfassend:
einen Farbspezifizierungsschritt (638) zum Spezifizieren einer Farbe, die mindestens einem der ermittelten Kreise entspricht, basierend auf dem spezifizierten Bild, wobei, wenn ein Kreis, der einer Farbe entspricht, ermittelt wird, der Umrissdetektionsschritt das Versuchen umfasst, einen Umriss von einem Bild eines Kanals zu ermitteln, der der Farbe entspricht, und, wenn kein Umriss ermittelt wird, das Versuchen umfasst, einen Umriss von einem Bild eines anderen Kanals zu ermitteln.

18. Verfahren (600) nach Anspruch 17, wobei der Farbspezifizierungsschritt (638) einen oder mehrere der folgenden Punkte umfasst:
Spezifizieren (1010) einer Farbe als weiß, die unter den ermittelten Kreisen einem Kreis an der vorbestimmten Position entspricht;
Spezifizieren (1020) einer Farbe als rot, die unter den Kreisen, die von einem Bild des Cr-Kanals von dem spezifizierten Bild ermittelt werden, einem Kreis entspricht, für den ein Wert, der auf dem Wert von mindestens einem Pixel innerhalb des Kreises in dem Bild des Cr-Kanals basiert, größer als ein vorbestimmter Wert und größer als ein Wert ist, der erhalten wird durch Multiplizieren eines Wertes, der auf dem Wert eines entsprechenden Pixels in einem Bild des Cb-Kanals von dem spezifizierten Bild basiert, mit einem vorbestimmten Verhältnis; und
Spezifizieren (1030) einer Farbe als blau, die unter den Kreisen, die von einem Bild des Cb-Kanals von dem spezifizierten Bild ermittelt werden, einem Kreis entspricht, für den ein Wert, der auf dem Wert von mindestens einem Pixel innerhalb des Kreises in dem Bild des Cb-Kanals basiert, größer als ein vorbestimmter Wert und größer als ein Wert ist, der erhalten wird durch Multiplizieren eines Wertes, der auf dem Wert eines entsprechenden Pixels in einem Bild des Cr-Kanals von dem spezifizierten Bild basiert, mit einem vorbestimmten Verhältnis.

19. Computerprogramm, das einen Computer dazu veranlasst, das Verfahren nach einem der Ansprüche 10 bis 18 auszuführen.

## Revendications

1. Système (300) comprenant :
un moyen de capture d'image mobile (310) ayant un axe optique ;
un moyen de détection (320) pour fournir une sortie en fonction d'une inclinaison de l'axe optique ;
un premier moyen de détermination (332) pour déterminer si une image d'un objet sphérique ayant une taille prédéterminée est capturée à une position prédéterminée dans une image de sortie du moyen de capture d'image ;
un second moyen de détermination (333) pour, en utilisant la sortie du moyen de détection, déterminer si un plan perpendiculaire à l'axe optique est horizontal, et
un moyen (334) pour stocker automatiquement une image de sortie du moyen de capture d'image en tant qu'image spécifiée quand :
il est déterminé qu'une image d'un objet sphérique ayant la taille prédéterminée est capturée à la position prédéterminée dans l'image de sortie ; et
il est déterminé qu'un plan perpendiculaire à l'axe optique est horizontal en utilisant la sortie du moyen de détection (320).

2. Système (300) selon la revendication 1, comprenant en outre :
un moyen d'affichage (340) pour, chevauchant un cercle ayant la taille prédéterminée et une indication en fonction d'une inclinaison de l'axe optique, afficher une image de sortie du moyen de capture d'image, le cercle étant affiché à la position prédéterminée dans l'image de sortie.

3. Système (300) selon la revendication 2, dans lequel :
le premier moyen de détermination (332) détermine si une image d'un objet sphérique ayant la taille prédéterminée est capturée à la position prédéterminée dans l'image de sortie en comparant une valeur basée sur la valeur de luminance d'au moins un pixel à l'intérieur du cercle affichée de manière superposée dans l'image de sortie avec une valeur basée sur la valeur de luminance d'au moins un pixel à l'extérieur du cercle.

4. Système (300) selon l'une quelconque des revendications 1 à 3, comprenant en outre :
un moyen de détection de cercle (331) pour, sur la base de l'image spécifiée, détecter des cercles ayant des tailles dans une première plage prédéterminée dans chacun de la pluralité d'images de canal ;
un moyen de détection de contour (335) pour, sur la base de l'image spécifiée, détecter, pour chaque cercle des cercles détectés, un contour lié au cercle des cercles détectés, le contour détecté étant positionné sur un segment de ligne reliant le centre du cercle des cercles détectés et le centre d'un autre des cercles détectés, et étant positionné dans une seconde plage prédéterminée à partir du centre du cercle des cercles détectés, et, s'il existe une pluralité de tels contours, étant positionné le plus à l'extérieur du centre du cercle des cercles détectés ; et
un moyen (336) pour mesurer une distance dans l'image spécifiée entre les contours détectés qui sont positionnés sur un segment de ligne reliant le centre d'un premier cercle des cercles détectés et le centre d'un second cercle des cercles détectés, et qui sont liés au premier cercle et au second cercle.

5. Système (300) selon la revendication 4, comprenant en outre :
un moyen (337) pour, à l'aide d'un coefficient de conversion, convertir la distance mesurée en une distance dans une unité prédéterminée, dans lequel le moyen d'affichage (340) affiche la distance dans l'unité prédéterminée.

6. Système (300) selon la revendication 4 ou 5, dans lequel le moyen de détection de cercle (331) comprend :
un moyen de génération d'image par canal (410) pour, sur la base de l'image spécifiée, générer des images d'une pluralité de canaux ;
un moyen de détection de cercle par canal (420a, 420b) pour, à partir des images des canaux respectifs générées par le moyen de génération d'image par canal, détecter des cercles ayant des tailles dans la première plage prédéterminée ; et
un moyen (430) pour, si la distance entre les centres d'au moins deux cercles détectés respectivement à partir d'images de canaux différents par le moyen de détection de cercle par canal est égale ou inférieure à un seuil prédéterminé, exclure, du cercles, tout cercle autre, parmi les au moins deux cercles, qu'un cercle ayant une taille la plus proche de la moyenne des tailles de tous les cercles détectés à partir des images des canaux respectifs par le moyen de détection de cercle par canal.

7. Système (300) selon la revendication 6, dans lequel
la pluralité de canaux comprend deux ou plusieurs parmi un canal R, un canal G, un canal B, un canal Y, un canal Cr, un canal Cb, un premier canal composite, et un second canal composite ; chaque pixel dans une image du premier canal composite a une valeur obtenue en effectuant une correction gamma sur la somme de :
la valeur absolue d'une différence entre la valeur d'un pixel correspondant dans une image du canal Cr et la valeur médiane des valeurs de tous les pixels de l'image du canal Cr, et
la valeur absolue d'une différence entre la valeur d'un pixel correspondant dans une image du canal Cb et la valeur médiane des valeurs de tous les pixels de l'image du canal Cb ; et
chaque pixel dans une image du second canal composite a une valeur obtenue en effectuant une correction gamma sur la valeur absolue d'une différence entre la valeur d'un pixel correspondant dans une image du canal Y et la valeur médiane des valeurs de tous les pixels de l'image du canal Y.

8. Système (300) selon la revendication 6 ou 7, comprenant en outre :
un moyen de spécification de couleur (338) pour, sur la base de l'image spécifiée, spécifier une couleur correspondant à au moins un des cercles détectés, dans lequel, lorsqu'un cercle correspondant à une couleur est détecté, le moyen de détection de contour essaie de détecter un contour à partir d'une image d'un canal correspondant à la couleur, et, si aucun contour n'est détecté, le moyen de détection de contour essaie de détecter un contour à partir d'une image d'un canal différent.

9. Système (300) selon la revendication 8, dans lequel le moyen de spécification de couleur (338) comprenant un ou plusieurs parmi :
un moyen (510) pour spécifier comme blanche une couleur correspondant à, parmi les cercles détectés, un cercle à la position prédéterminée ;
un moyen (520) pour spécifier comme rouge une couleur correspondant à, parmi les cercles détectés à partir d'une image du canal Cr à partir de l'image spécifiée, un cercle pour lequel une valeur basée sur la valeur d'au moins un pixel à l'intérieur du cercle dans l'image du canal Cr est supérieure à une valeur prédéterminée et supérieure à une valeur obtenue en multipliant, par un rapport prédéterminé, une valeur basée sur la valeur d'un pixel correspondant dans une image du canal Cb à partir de l'image spécifiée ; et
un moyen (530) pour spécifier comme bleu une couleur correspondant à, parmi les cercles détectés à partir d'une image du canal Cb à partir de l'image spécifiée, un cercle pour lequel une valeur basée sur la valeur d'au moins un pixel à l'intérieur du cercle dans l'image du canal Cb est plus grande qu'une valeur prédéterminée et plus grande qu'une valeur obtenue en multipliant, par un rapport prédéterminé, une valeur basée sur la valeur d'un pixel correspondant dans une image du canal Cr à partir de l'image spécifiée.

10. Procédé (600) exécuté par un ordinateur comprenant :
une première étape de détermination (700) comprenant :
l'acquisition à partir d'une caméra d'une image de sortie ; et
la détermination si une image d'un objet sphérique ayant une taille prédéterminée est capturée à une position prédéterminée dans l'image de sortie ; et
une seconde étape de détermination (800) comprenant :
l'acquisition à partir d'un capteur (320) d'une sortie dépendant d'une inclinaison d'un axe optique d'un système optique dans la caméra ; et
la détermination, en utilisant la sortie, si un plan perpendiculaire à l'axe optique est horizontal ; et
une étape (610, 620) de stockage automatique d'une image de sortie à partir de la caméra en tant qu'image spécifiée quand :
il est déterminé qu'une image d'un objet sphérique ayant la taille prédéterminée est capturée à la position prédéterminée dans l'image de sortie ; et
il est déterminé qu'un plan perpendiculaire à l'axe optique est horizontal en utilisant la sortie à partir du capteur (320).

11. Procédé (600) selon la revendication 10, comprenant en outre :
l'affichage (640) sur un affichage, chevauchant un cercle ayant la dimension prédéterminée et une indication dépendant d'une inclinaison de l'axe optique, d'une image de sortie de la caméra, le cercle étant affiché à la position prédéterminée dans l'image de sortie.

12. Procédé (600) selon la revendication 11, dans lequel :
la première étape de détermination (700) comprend la détermination si une image d'un objet sphérique ayant la taille prédéterminée est capturée à la position prédéterminée dans l'image de sortie en comparant une valeur basée sur la valeur de luminance d'au moins un pixel à l'intérieur du cercle affiché de manière superposée dans l'image de sortie avec une valeur basée sur la valeur de luminance d'au moins un pixel à l'extérieur du cercle.

13. Procédé (600) selon l'une quelconque des revendications 10 à 12, comprenant en outre :
une étape de détection de cercle (731) pour, sur la base de l'image spécifiée, détecter des cercles ayant des tailles dans une première plage prédéterminée dans chacune de la pluralité d'images de canal ;
une étape de détection de contour (635) pour, sur la base de l'image spécifiée, détecter, pour chaque cercle des cercles détectés, un contour lié au cercle des cercles détectés, le contour détecté étant positionné sur un segment de ligne reliant le centre du cercle des cercles détectés et le centre d'un autre cercle des cercles détectés, et étant positionné dans une seconde plage prédéterminée à partir du centre du cercle des cercles détectés, et, s'il existe une pluralité de tels contours, étant positionné le plus à l'extérieur à partir du centre du cercle des cercles détectés ; et
une étape (636) de mesure d'une distance dans l'image spécifiée entre les contours détectés qui sont positionnés sur un segment de ligne reliant le centre d'un premier cercle des cercles détectés et le centre d'un second cercle des cercles détectés, et qui sont liés au premier cercle et au second cercle.

14. Procédé (600) selon la revendication 13, comprenant en outre :
une étape (637) pour, à l'aide d'un coefficient de conversion, convertir la distance mesurée en une distance dans une unité prédéterminée ; et
une étape d'affichage dans un affichage de la distance dans l'unité prédéterminée.

15. Procédé (600) selon la revendication 13 ou 14, dans lequel l'étape de détection de cercle (731) comprend :
une étape de génération d'image par canal (910) pour, sur la base de l'image spécifiée, générer des images d'une pluralité de canaux ;
des étapes de détection de cercle par canal (920a, 920b) pour, à partir des images des canaux respectifs générées lors d'une étape de génération d'image par canal, détecter des cercles ayant des tailles dans la première plage prédéterminée ; et
une étape (930) pour, si la distance entre les centres d'au moins deux cercles détectés respectivement à partir d'images de canaux différents dans les étapes de détection de cercle par canal (920a, 920b) est égale ou inférieure à un seuil prédéterminé, exclure, des cercles détectés,
tout cercle autre, parmi les au moins deux cercles, qu'un cercle ayant une taille la plus proche de la moyenne des tailles de tous les cercles détectés à partir des images des canaux respectifs dans les étapes de détection de cercle par canal (920a, 920b).

16. Procédé (600) selon la revendication 15, dans lequel
la pluralité de canaux comprend deux ou plusieurs parmi un canal R, un canal G, un canal B, un canal Y, un canal Cr, un canal Cb, un premier canal composite, et un second canal composite ; chaque pixel dans une image du premier canal composite a une valeur obtenue en effectuant une correction gamma sur la somme de :
la valeur absolue d'une différence entre la valeur d'un pixel correspondant dans une image du canal Cr et la valeur médiane des valeurs de tous les pixels de l'image du canal Cr, et
la valeur absolue d'une différence entre la valeur d'un pixel correspondant dans une image du canal Cb et la valeur médiane des valeurs de tous les pixels de l'image du canal Cb ; et
chaque pixel dans une image du second canal composite a une valeur obtenue en effectuant une correction gamma sur la valeur absolue d'une différence entre la valeur d'un pixel correspondant dans une image du canal Y et la valeur médiane des valeurs de tous les pixels de l'image du canal Y.

17. Procédé (600) selon la revendication 15 ou 16, comprenant en outre :
une étape de spécification de couleur (638) pour, sur la base de l'image spécifiée, spécifier une couleur correspondant à au moins un des cercles détectés, dans lequel, lorsqu'un cercle correspondant à une couleur est détecté, l'étape de détection de contour comprenant une tentative de détection d'un contour à partir d'une image d'un canal correspondant à la couleur, et, si aucun contour n'est détecté, l'étape de détection de contour comprenant une tentative de détection d'un contour à partir d'une image d'un canal différent.

18. Procédé (600) selon la revendication 17, dans lequel l'étape de spécification de couleur (638) comprend une ou plusieurs des étapes consistant à :
spécifier (1010) comme blanche une couleur correspondant, parmi les cercles détectés, à un cercle à la position prédéterminée ;
spécifier (1020) comme rouge une couleur correspondant, parmi les cercles détectés à partir d'une image du canal Cr à partir de l'image spécifiée, à un cercle pour lequel une valeur basée sur la valeur d'au moins un pixel à l'intérieur du cercle dans l'image du canal Cr est supérieure à une valeur prédéterminée et supérieure à une valeur obtenue en multipliant, par un rapport prédéterminé, une valeur basée sur la valeur d'un pixel correspondant dans une image du canal Cb à partir de l'image spécifiée ; et
spécifier (1030) comme bleu une couleur correspondant, parmi les cercles détectés à partir d'une image du canal Cb de l'image spécifiée, à un cercle pour lequel une valeur basée sur la valeur d'au moins un pixel à l'intérieur du cercle dans l'image du canal Cb est plus grande qu'une valeur prédéterminée et plus grande qu'une valeur obtenue en multipliant, par un rapport prédéterminé,
une valeur basée sur la valeur d'un pixel correspondant dans une image du canal Cr à partir de l'image spécifiée.

19. Programme informatique amenant un ordinateur à exécuter le procédé selon l'une quelconque des revendications 10 à 18.
